# EUROPÄISCHE PATENTSCHRIFT

(11) **EP 4 124 787 B1**
(45) Veröffentlichungstag und Bekanntmachung des Hinweises auf die Patenterteilung: **30.07.2025**
(21) Anmeldenummer: 22179941.4
(22) Anmeldetag: 20.06.2022
(51) Int. Cl.: F16K 7/12

(54) **MEHRTEILIGES DRUCKSTUECK FÜR EIN MEMBRANVENTIL**
MULTI-PART PRESSURE FITTING FOR A DIAPHRAGM VALVE
PIÈCE DE PRESSION EN PLUSIEURS PARTIES POUR UNE VANNE À DIAPHRAGME

(30) Priorität: 27.07.2021 DE 102021119356
(43) Veröffentlichungstag der Anmeldung: 01.02.2023
(73) Patentinhaber: SISTO Armaturen S.A., 6468 Echternach (LU)
(72) Erfinder: HACKENBERGER, Bernd, 6468 Echternach (LU); LOEW, Pascal, 6468 Echternach (LU); SICHWARDT, Paul, 6468 Echternach (LU)
(74) Vertreter: Busch, Tobias

(56) Entgegenhaltungen:
- DE-B- 1 291 584
- DE-B1- 1 600 778

## Beschreibung

Die Erfindung betrifft ein Membranventil, das eine Membran und eine Anordnung zur Membranverformung aufweist, wobei die Anordnung zur Membranverformung mit einem Antriebselement zusammenwirkt.

Bei Membranventilen dichtet die Membran das Ventil vorzugsweise auf einem Dichtsteg ab. Ein solches Membranventil wird beispielsweise in der DE 195 05 747 A1 beschrieben. Dabei bildet eine Membran eine bewegliche, dichtende Wand, die zwei Räume mit in der Regel unterschiedlichen Medien (Gase, Flüssigkeiten) und häufig auch unterschiedlichen Druckverhältnissen voneinander trennt.

Ein wichtiges Qualitätsmerkmal einer Membran ist deren Beweglichkeit, das heißt die Fähigkeit senkrecht zur Einspannfläche einen Hub auszuführen, der mechanisch angetrieben bedingt sein kann oder der infolge einer Druckdifferenz erfolgen kann.

Weiterhin ist die Beständigkeit der Membran von Bedeutung, insbesondere wenn aggressive Medien gefördert werden. Die Bewegungsfähigkeit und Beständigkeit einer Membran hängt im Wesentlichen von der Werkstoffkombination ab, aus der die Membran besteht. Als Grundwerkstoffe werden hauptsächlich Elastomere verwendet, die zur Erzielung einer höheren Festigkeit mit Gewebeeinlagen verstärkt werden können. Als Elastomere haben sich Zusammensetzungen auf Basis von Ethylen-Propylen-Dien-Kautschuk (EPDM) bewährt.

Durch eine pneumatische, elektrische oder mechanische Energie angetrieben, überträgt eine Kolbenstange einen Bewegungsimpuls auf die eingespannte Membran, um die Membran zu verformen, wodurch ein Öffnen oder Schließen des Ventils bewirkt wird. Um die Membran schonend zu verformen, wirkt die Kolbenstange nicht unmittelbar auf die Membran, sondern üblicherweise über ein sogenanntes Druckstück. Ein solches Druckstück ist meist ein bearbeiteter Körper mit einer nicht rauen Oberfläche und einer konvexen Krümmung. Oft ist das Druckstück mit der Membran über eine Membranschraube verbunden.

Membranventile, wie in der EP 3 324 084 B1 offenbart, werden in der Regel zum Öffnen und Schließen von Rohrleitungen eingesetzt. Aufgrund ihrer extrem nichtlinearen Ventilkennlinien werden sie selten als Regelventil eingesetzt. Durch die Bauform des Membranventils wird bereits bei einem geringen Öffnungsgrad ein großer Querschnitt freigegeben, woraus ein meist großer Durchfluss eines Fluids resultiert. Zudem ändert sich der Durchfluss des Fluids durch das Membranventil im Bereich von 80 - 100 % des maximalen Öffnungsgrads nur noch minimal.

Ventilkennlinien zeigen die Abhängigkeit des Durchflusses vom Ventilhub bzw. von der Ventilöffnung. Dabei hängt die Form der Ventilkennlinie von der Gestalt des Ventilsitzes sowie des Absperrkörpers ab. Vorteilhaft zum Regeln des Durchflusses sind Kennlinien, die als linear oder gleichprozentig beschrieben werden. Bei einer linearen Ventilkennlinie ist der Durchfluss direkt proportional zum Ventilhub, sofern der Druckabfall konstant ist. Gleichprozentige Kennlinien zeigen bei gleichen Hubänderungen gleiche relative Durchflussänderungen.

Bekannt sind Sonderformen von Membranventilen, die als Regelventil eingesetzt werden. Die Ventilkennlinie wird dabei über die Ausgestaltung der Membran, insbesondere über die Form der Membran, eingestellt. Die DE 10 2013 215 294 A1 offenbart eine besonders ausgeformte parabolkegelförmige Membran. Die Form der Parabolkegel erinnert dabei an die Form von klassischen Regelkegeln, die jedoch nicht mit einem Dichtsteg abdichten können.

Die DE 10 2019 105 515 A1 beschreibt ein Membranventil, das eine Ventilsteuerung umfasst. Die komplexe Ventilsteuerung weist ein Stellglied und ein Korrekturglied mit einer Mehrzahl von vordefinierten Korrekturkennlinien auf. In diesem Beispiel wird mit großem und kostenintensivem Aufwand eine Membran nahezu permanent belastet, was sich nachteilig auf die Nutzungszeit der Membran auswirken kann.

Die DE 1 291 584 offenbart ein Membranventil zur Steuerung eines Druckmittelstromes mit einem Ventilgehäuse mit einem Strömungsweg, einem Ventilsitz und einer dem Sitz gegenüberliegenden und durch eine Membran abgedeckten Membranöffnung sowie einer mit der Membran verbundenen Betätigungsvorrichtung zum wahlweisen Anheben und Aufsetzen der Membran in Bezug auf den Sitz, wobei zu der Betätigungsvorrichtung ein unmittelbar an diese angeschlossenes, inneres Druckstückmittelstück und wenigstens ein gegenüber dem Druckstückmittelstück verlagerbares Druckstückaußenstück gehören, gekennzeichnet durch eine Federnanordnung, die derart zwischen das Druckstückaußenstück und die Betätigungsvorrichtung eingeschaltet ist, dass bei Bewegung der Betätigungsvorrichtung im Ventilöffnungssinne zunächst nur das Druckstückmittelstück und damit der benachbarte innere Bereich der Membran von dem Sitz abgehoben werden, um den Strömungsweg an dem Sitz teilweise zu öffnen, wohingegen der äußere Membranbereich durch die Federnanordnung in Anlage an den Sitz gehalten wird, und dass bei weiterer Bewegung der Betätigungsvorrichtung das Druckstückaußenstück und damit der ihm benachbart liegende Membranbereich von dem Sitz abgehoben werden.

Die DE 1 600 778 beschreibt ein Membranabsperrventil mit einer zwischen Ventilgehäuseunter- und -oberteil eingespannten Membran, deren Form im ausgebauten Zustand des Ventils der Schließstellung entspricht, die in ihrer Mitte an einem mit dem Ende des Ventilantriebs verbundenen inneren Druckstück befestigt ist, das von einem zwischen zwei Endstellungen beweglichen, von einer oder mehreren den Ventilantrieb umgebenden und sich an einem Widerlager am Ventilantrieb abstützenden Federn ständig in Richtung gegen das innere Druckstück gedrückten äußeren Druckstück umgeben ist. An der Wand des Gehäuseoberteils ist eine das äußere Druckstück bei einer während des Ventilausbaus über die Ventilschließstellung hinaus erfolgenden Bewegung des inneren Druckstücks arretierende Anschlagvorrichtung vorgesehen.

Aufgabe der Erfindung ist es, ein Membranventil bereitzustellen, das einen linearen Zusammenhang zwischen Membranhub und Durchfluss realisieren kann. Darüber hinaus sollen die Einzelteile des Membranventils den Anforderungen eines dauerhaften Betriebes gerecht werden und dabei äußerst langlebige Eigenschaften aufweisen. Das Membranventil soll besonders wartungsarm und äußerst montagefreundlich ausgeführt sein. Der Antrieb der Membran soll die Membran besonders schonend verformen.

Diese Aufgabe wird erfindungsgemäß durch ein Membranventil gemäß den Merkmalen des Anspruchs 1 gelöst. Bevorzugte Varianten sind den Unteransprüchen, der Beschreibung und den Figuren zu entnehmen.

Gemäß der Erfindung umfasst die Anordnung zur Membranverformung mindestens ein elastisches Verformungselement, ein Übertragungselement und ein Konturelement mit einer Membrankontaktfläche, wobei das elastische Verformungselement zwischen dem Übertragungselement und dem Konturelement angeordnet ist und wobei das Übertragungselement mit einer Membranschaube verbunden ist, wobei das Übertragungselement aus einem zylindrischen Membrankontakt und einer metallischen Scheibe einstückig ausgebildet ist und der zylindrische Membrankontakt eine Aufnahme der Membranschraube sowie eine glatte Oberfläche in Form einer zylindrischen Führungsfläche aufweist, die eine konvexe Krümmung ausbildet.

Ein elastisches Verformungselement kann insbesondere als Feder ausgeführt sein. Vorzugsweise empfiehlt es sich, für die Anordnung zur Membranverformung eine Tellerfeder zwischen dem Übertragungselement und dem Konturelement anzuordnen. Je nach Größe des Membranventils umfasst das elastische Verformungselement mehr als zwei, vorzugsweise mehr als drei, insbesondere mehr als vier, Federelemente.

Das elastische Verformungselement erfüllt die Aufgabe, eine Bewegung des Übertragungselements zur Verformung der Membran verzögert auf das Konturelement zu übertragen. Dadurch wird eine Membranverformung erzielt, die dem Öffnungsgrad des Ventils einen Ventilquerschnitt zuweist, der dem einer linearen Ventilkennlinie entspricht.

Vorzugsweise verformt bei geringen Öffnungsgraden nur das Übertragungselement einen geringen Teil der Membranfläche, wobei das Konturelement aufgrund der Wirkungsweise des elastischen Verformungselements noch keine Membranverformung bewirkt.

Das Übertragungselement kann in einer vorteilhaften Variante der Erfindung die zylindrische Fortsetzung des Antriebselements sein, wobei das Antriebselement vorzugsweise als Kolbenstange ausgebildet ist. Dabei ist die Verbindung zwischen Antriebselement und Übertragungselement idealerweise kraftschlüssig ausgebildet.

Darüber hinaus weist das Übertragungselement in einer besonders vorteilhaften Variante der Erfindung zusätzlich einen ringförmigen Körper auf. Vorzugsweise ist der ringförmige Körper als metallische Scheibe ausgebildet und am Übergang von Antriebselement zu Übertragungselement angeordnet. Diese metallische Scheibe bildet eine Führungsfläche zur Aufnahme und zur Mitnahme bei Bewegungen für das elastische Verformungselement. Das elastische Verformungselement liegt an der metallischen Scheibe an und wird durch die Haube des Membranventils sowie die Ausführung der metallischen Scheibe positioniert.

Gemäß der Erfindung ist das Übertragungselement aus einem zylindrischen Membrankontakt und einer metallischen Scheibe einstückig ausgebildet. Dabei weist der zylindrische Membrankontakt eine Aufnahme der Membranschraube und eine glatte Oberfläche in Form einer zylindrischen Führungsfläche auf, die eine konvexe Krümmung bzw. den Ansatz einer konvexen Krümmung ausbildet. Das Übertragungselement kann als metallisches Gussteil oder als generativ gefertigtes Bauteil ausgebildet sein. In einer weiteren Variante der Erfindung ist das Übertragungselement additiv aus einem Kunststoff, vorzugsweise aus einem Hochleistungskunststoff, erzeugt.

In einer alternativen Variante der Erfindung hat das Antriebselement in Form einer Kolbenstange direkten Kontakt mit der Membran und ist mithilfe einer Membranschraube verbunden. Das Übertragungselement ist dabei als metallische Scheibe ausgebildet, die auf einer Schulter der Kolbenstange angeordnet ist. Auch in dieser Variante der Erfindung weist das Übertragungselement eine Führungsfläche zur Aufnahme und zur Mitnahme bei Bewegungen für das elastische Verformungselement auf.

In einer weiteren, alternativen Variante der Erfindung ist das Übertragungselement mit dem Antriebselement einstückig ausgebildet und bildet somit den Fortsatz der Kolbenstange mit angeformter Metallscheibe. Je nach Variante der Erfindung verformt das Übertragungselement mittelbar oder unmittelbar die Membran des Membranventils.

Zur Ausrichtung und Positionierung des Konturelements ist an dem Übertragungselement vorzugweise mindestens ein Befestigungselement angeordnet. Das Befestigungselement kann in Form einer Schraube ausgebildet sein. Zur gleichmäßigen Befestigung und zur Vermeidung von Spannungsspitzen kann das Konturelement mit zwei oder vier oder sechs Schrauben positioniert sein.

Erfindungsgemäß ist das Konturelement ringförmig ausgebildet und weist eine konvexe Krümmung zur Verformung der Membran auf. Das Konturelement ist zwischen der Ventilhaube und dem Übertragungselement sowie zwischen dem elastischen Verformungselement und der Membran angeordnet. Vorzugsweise ist das Konturelement als metallischer Ring ausgebildet, dessen Membrankontaktfläche eine konvexe Krümmung aufweist und zur schonenden Verformung der Membran besonders glatt ausgebildet ist. Dabei weist die Membrankontaktfläche einen Mittenrauwert Ra kleiner als 0,1 µm auf.

In einer vorteilhaften Variante der Erfindung für große Membranventile ist das Konturelement in mindestens zwei Einzelteile untergliedert. Für besonders große Membranventile ist das Konturelement in drei oder vier Einzelteile untergliedert. Dabei sind die Einzelteile des Konturelements vorzugsweise ringförmig ausgebildet und weisen eine konvexe Krümmung auf, die von Einzelteil zu Einzelteil ohne Unterbrechung der Krümmung übergeht.

Aufgrund der Wirkung der elastischen Verformungselemente verformen die Konturelemente die Membran erst bei größeren Ventilöffnungsgraden. Die Anordnung zur Membranverformung aus mehreren Elementen realisiert einen Durchfluss eines Fluids durch das Membranventil direkt proportional zum Ventilhub. Der Einbau entsprechender elastischer Verformungselemente ermöglicht, dass das Membranventil bei gleichen Hubänderungen gleiche relative Durchflussänderungen erzielt.

Gemäß der Erfindung kann die Anordnung zur Membranverformung ein Druckverteilungselement umfassen. Dabei ist das Druckverteilungselement zwischen der Membran auf der einen Seite und dem Übertragungselement sowie dem Konturelement auf der anderen Seite angeordnet. Das Druckverteilungselement ist vorzugsweise als Abstützspirale ausgebildet.

Zur Erzielung einer gewünschten Ventileinstellung wird das Antriebselement meist pneumatisch oder elektrisch verfahren. Aufgrund der kraftschlüssigen Verbindung zum Übertragungselement verformt das Übertragungselement direkt die Membran, wodurch ein kleiner Ventilquerschnitt exakt passend zum Ventilhub zum Durchströmen eines Fluids freigegeben wird. Ein Teil der Antriebsenergie wird gleichzeitig auf das elastische Verformungselement übertragen und von diesem gespeichert, wodurch das Konturelement in Position bleibt und die Membran nicht weiter verformt wird. Erst bei einem größeren Ventilhub überträgt das elastische Verformungselement die Bewegung auf das Konturelement. Somit bewegen sich Übertragungselement, elastisches Verformungselement und Konturelement gleichzeitig, um die Membran exakt gemäß der linearen Ventilkennlinie zu verformen und einen zunehmend größeren Ventilquerschnitt zum Durchströmen des Fluids freizugeben.

Die Linearisierung der Ventilkennlinie ist durch die mehrteilige Anordnung zur Membranverformung besonders einfach sowie äußerst betriebssicher realisiert. Darüber hinaus ist durch eine besondere Geometrie der Anordnung auch eine individuelle, kundenorientierte Gestaltung der Ventilkennlinie ausführbar. Des Weiteren ist ein Umrüsten bestehender Ventile durch einen Austausch eines herkömmlichen Druckstücks durch eine Anordnung zur Membranverformung ohne Aufwand und ohne Änderung der Rohrleitungen ausführbar. Dabei ist der bestehende Ventilkörper und die Ventilhaube sowie deren aufgesetzter Antrieb zur Aufnahme einer Anordnung zur Membranverformung verwendbar.

Die Anordnung zur Membranverformung verformt die Membran besonders schonend und realisiert gleichzeitig definierte Ventilquerschnitte linear zum Ventilhub. Die schonende Verformung der Membran und die robuste Ausbildung der Anordnung der Membranverformung gewährleisten einen sicheren und dauerhaften Betrieb des Membranventils. Darüber hinaus ist die Anordnung zur Membranverformung besonders wartungsarm und gleichzeitig auch montagefreundlich umgesetzt.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Schnittdarstellung eines Membranventils nach dem Stand der Technik,
- Fig. 2: eine Schnittdarstellung einer Anordnung zur Membranverformung für kleine Membranventile,
- Fig. 3: eine Schnittdarstellung einer Anordnung zur Membranverformung für große Membranventile,
- Fig. 4: eine Schnittdarstellung einer weiteren Anordnung zur Membranverformung für nicht erfindungsgemäße Membranventile.

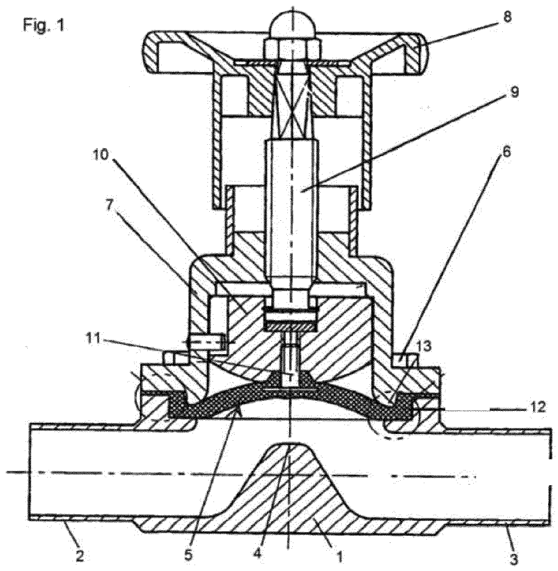

Das in Fig. 1 dargestellte, herkömmliche Membranventil, nach dem Stand der Technik, besitzt ein Gehäuseunterteil 1, welches Anschlüsse 2, 3 und einen Sitz 4 umfasst. Der Sitz 4 dient als korrespondierende Auflagefläche für eine Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein herkömmliches Druckstück 10 befestigt. Das Druckstück 10, nach dem bisherigen Stand der Technik, ist verschieblich im Gehäuseoberteil 7 angeordnet und wird von einer inneren Wand des Gehäuseoberteils 7 geführt. Durch Betätigung des Antriebs 8 wird über die Spindel 9 eine vertikale Verschiebung des Druckstücks 10 bewirkt, sodass sich die Membran 5 verformt und der freie Querschnitt zwischen dem Sitz 4 und der Membran 5 vergrößert bzw. verkleinert werden kann. Der Kontakt zwischen der Membran 5 und dem Antrieb 8 wird verbessert durch die Verwendung eines stiftartigen Elements 11, das flächig mit der Membran 5 verbunden und mit dem Antrieb 8 beispielsweise verschraubt ist. Die Membran 5 in der Fig. 1 ist als eine gekammerte Membran 5 ausgestaltet, wobei der Randbereich 12 der Membran 5 durch eine spezielle Fassung 13 fixiert ist, die aus dem Gehäuseoberteil 7 und dem Gehäuseunterteil 1 gebildet wird.

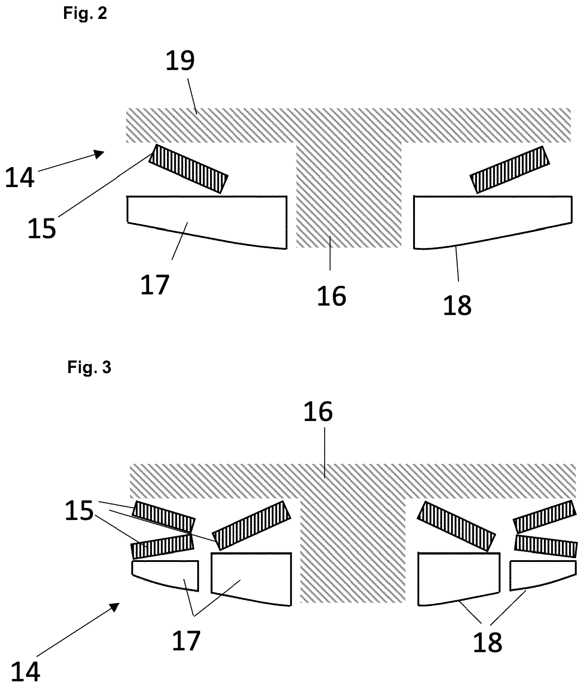

In Fig. 2 ist eine Schnittdarstellung einer Anordnung zur Membranverformung 14 für kleine Membranventile dargestellt. Die Anordnung zur Membranverformung 14 umfasst ein elastisches Verformungselement 15, ein Übertragungselement 16 und ein Konturelement 17. Das Übertragungselement 16 ist mit dem nicht dargestellten Antriebselement 9 verbunden. An der Verbindungsstelle weist das Übertragungselement 16 einen ringförmigen Körper 19 auf, der mit der dem elastischen Verformungselement 15 zugewandten Seite eine Führungsfläche zur Aufnahme und zur Mitnahme bei Bewegungen für das elastische Verformungselement 15 umfasst. Das Konturelement 17 umfasst eine Membrankontaktfläche 18, die eine konvexe Krümmung aufweist. Die Membrankontaktfläche 18 ist besonders glatt ausgebildet. Die konvexe Krümmung und die speziell bearbeitete Oberfläche dienen zur besonders schonenden Verformung der Membran 5.

In Fig. 3 ist eine Schnittdarstellung einer Anordnung zur Membranverformung 14 für große Membranventile dargestellt. Die Anordnung zur Membranverformung 14 umfasst drei ringförmige elastische Verformungselemente 15, ein Übertragungselement 16 und zwei ringförmige Konturelemente 17.

Die sechsteilige Ausbildung der Anordnung zur Membranverformung 14 erlaubt es, zu jedem Ventilhub die Membranverformung so zu gestalten, dass der Ventilquerschnitt und somit der Ventildurchfluss einen linearen Zusammenhang zum Öffnungsgrad aufweisen. Dabei öffnet das Membranventil von innen nach außen, wobei zunächst das Übertragungselement 16 eine Membranverformung in der Membranmitte erzielt. Mit zunehmendem Ventilhub öffnet das Übertragungselement 16 zunehmend und auch das innere Konturelement 17 nimmt an der Membranverformung teil. Bei einem großen Ventilhub öffnen beide ringförmigen Konturelemente 17 zusammen mit dem Übertragungselement 16, so dass sich die Membran 5 vollständig in die Offenstellung verformen kann.

Die elastischen Verformungselemente 15 nehmen zunächst den Bewegungsimpuls des Übertragungselementes 16 beim Öffnungsvorgang auf und übertragen diesen verzögert auf die Konturelemente 17, so dass das Membranventil eine lineare Ventilkennlinie beim Membranverformungsvorgang aufweist. Je nach Ausbildung der elastischen Verformungselemente 15 kann die Ventilkennlinie des Membranventils auch gleichprozentig ausgebildet sein.

Die Konturelemente 17 weisen Membrankontaktflächen 18 auf, die über eine konvexe Krümmung verfügen und besonders glatt ausgebildet sind, um die Membran 5 schonend verformen zu können.

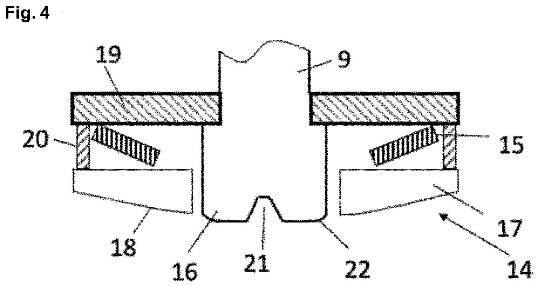

In Fig. 4 ist eine Schnittdarstellung einer weiteren Anordnung zur Membranverformung 14 dargestellt. Das Antriebselement 9 ist in dieser Variante der Erfindung einstückig mit dem Übertragungselement 16 ausgebildet. Das Übertragungselement 16 ist somit der Fortsatz der Kolbenstange und weist eine Öffnung 21 zur Aufnahme einer Membranschraube auf. Des Weiteren verfügt das Übertragungselement 16 über eine besonders glatte Membrankontaktfläche 22, die eine konvexe Rundung aufweist. Dies dient zur besonders schonenden Verformung der Membran 5.

Auf einer Schulter des Antriebselements 9 sitzt der ringförmige Körper 19, der die Form einer metallischen Scheibe aufweist. Der ringförmige Körper 19 weist eine Führungsfläche auf, die das elastische Verformungselement 15 verformt und bewegt. Das Befestigungselement 20 verbindet und positioniert das Konturelement 17 zum ringförmigen Element 19. Das elastische Verformungselement 15 ist in diesem Ausführungsbeispiel als Tellerfeder ausgebildet.

Das Konturelement 17 umfasst eine Membrankontaktfläche 18, die besonders glatt ausgebildet ist und eine konvexe Krümmung aufweist. Dabei geht die konvexe Krümmung der Membrankontaktfläche 22 nahtlos in die konvexe Krümmung der Membrankontaktfläche 18 über. Hierdurch lässt sich die Membran 5 besonders schonend und exakt verformen, wodurch exakte Membranventilstellungen erzielt werden können.

## Patentansprüche

1. Membranventil, das eine Membran (5) mit einer Membranschraube (11) und eine Anordnung zur Membranverformung (14) aufweist, wobei die Anordnung zur Membranverformung (14) mit einem Antriebselement (9) zusammenwirkt, wobei die Anordnung zur Membranverformung (14) mindestens ein elastisches Verformungselement (15), ein Übertragungselement (16) und ein Konturelement (17) mit einer Membrankontaktfläche (18) umfasst, und wobei das elastische Verformungselement (15) zwischen dem Übertragungselement (16) und dem Konturelement (17) angeordnet ist, **dadurch gekennzeichnet, dass** das Übertragungselement (16) mit einer Membranschaube (11) verbunden ist, wobei das Übertragungselement (16) aus einem zylindrischen Membrankontakt und einer metallischen Scheibe einstückig ausgebildet ist und der zylindrische Membrankontakt eine Aufnahme der Membranschraube (11) sowie eine glatte Oberfläche in Form einer zylindrischen Führungsfläche aufweist, die eine konvexe Krümmung ausbildet.

2. Membranventil nach Anspruch 1, **dadurch gekennzeichnet, dass** die Membrankontaktfläche (18) eine konvexe Rundung aufweist, die besonders glatt ausgebildet ist.

3. Membranventil nach Anspruch 1 oder 2, **dadurch gekennzeichnet, dass** das Konturelement (17) in mindestens zwei Einzelteile untergliedert ist, wobei die Einzelteile ringförmig ausgebildet sind.

4. Membranventil nach einem der Ansprüche 1 bis 3, **dadurch gekennzeichnet, dass** die Anordnung zur Membranverformung (14) ein Druckverteilungselement umfasst.

5. Membranventil nach einem der Ansprüche 1 bis 4, **dadurch gekennzeichnet, dass** das elastische Verformungselement (15) als Federelement, vorzugsweise als Tellerfeder, ausgebildet ist.

6. Membranventil nach einem der Ansprüche 1 bis 5, **dadurch gekennzeichnet, dass** das elastische Verformungselement (15) mehr als zwei, vorzugsweise mehr als drei, insbesondere mehr als vier, Federelemente umfasst.

7. Membranventil nach einem der Ansprüche 1 bis 6, **dadurch gekennzeichnet, dass** das Übertragungselement (16) mit dem Antriebselement (9) verbunden ist.

8. Membranventil nach einem der Ansprüche 1 bis 7, **dadurch gekennzeichnet, dass** das Übertragungselement (16) einen ringförmigen Körper (19) umfasst.

9. Membranventil nach einem der Ansprüche 1 bis 8, **dadurch gekennzeichnet, dass** das Übertragungselement (16) mit dem Antriebselement (9) einstückig ausgebildet ist.

10. Membranventil nach einem der Ansprüche 1 bis 9, **dadurch gekennzeichnet, dass** an dem Übertragungselement (16) mindestens ein Befestigungselement (20) zur Ausrichtung des Konturelements (17) angeordnet ist.

## Claims

1. Diaphragm valve comprising a diaphragm (5) with a diaphragm screw (11) and a diaphragm deformation arrangement (14), wherein the diaphragm deformation arrangement (14) interacts with a drive element (9), wherein the diaphragm deformation arrangement (14) comprises at least one elastic deformation element (15), a transmission element (16) and a contour element (17) with a diaphragm contact surface (18), and wherein the elastic deformation element (15) is arranged between the transmission element (16) and the contour element (17), **characterized in that** the transmission element (16) is connected to a diaphragm screw (11), wherein the transmission element (16) is configured in a single piece from a cylindrical diaphragm contact and a metallic disc, and the cylindrical diaphragm contact has a receptacle of the diaphragm screw (11) and a smooth surface in the form of a cylindrical guide surface, which forms a convex curvature.

2. Diaphragm valve according to Claim 1, **characterized in that** the diaphragm contact surface (18) has a convex roundness which is of particularly smooth configuration.

3. Diaphragm valve according to Claim 1 or 2, **characterized in that** the contour element (17) is divided into at least two individual parts, wherein the individual parts are of annular configuration.

4. Diaphragm valve according to one of Claims 1 to 3, **characterized in that** the diaphragm deformation arrangement (14) comprises a pressure distribution element.

5. Diaphragm valve according to one of Claims 1 to 4, **characterized in that** the elastic deformation element (15) is formed as a spring element, preferably as a cup spring.

6. Diaphragm valve according to one of Claims 1 to 5, **characterized in that** the elastic deformation element (15) comprises more than two, preferably more than three, in particular more than four, spring elements.

7. Diaphragm valve according to one of Claims 1 to 6, **characterized in that** the transmission element (16) is connected to the drive element (9).

8. Diaphragm valve according to one of Claims 1 to 7, **characterized in that** the transmission element (16) comprises an annular body (19).

9. Diaphragm valve according to one of Claims 1 to 8, **characterized in that** the transmission element (16) is configured in one piece with the drive element (9).

10. Diaphragm valve according to one of Claims 1 to 9, **characterized in that** at least one fastening element (20) for the orientation of the contour element (17) is arranged on the transmission element (16).

## Revendications

1. Vanne à membrane, qui comprend une membrane (5) avec une vis (11) de membrane et un agencement (14) de déformation de membrane, l'agencement (14) de déformation de membrane coopérant avec un élément d'entraînement (9), l'agencement (14) de déformation de membrane comprenant au moins un élément (15) de déformation élastique, un élément de transmission (16) et un élément de contour (17) avec une surface (18) de contact avec la membrane, et l'élément (15) de déformation élastique étant agencé entre l'élément de transmission (16) et l'élément de contour (17), **caractérisée en ce que** l'élément de transmission (16) est relié à une vis (11) de membrane, l'élément de transmission (16) étant formé d'un seul tenant à partir d'un contact de membrane cylindrique et d'un disque métallique, et le contact de membrane cylindrique présentant un logement pour la vis (11) de membrane ainsi qu'une surface lisse sous la forme d'une surface de guidage cylindrique qui forme une courbure convexe.

2. Vanne à membrane selon la revendication 1, **caractérisée en ce que** la surface de contact de la membrane (18) présente un arrondi convexe qui est particulièrement lisse.

3. Vanne à membrane selon la revendication 1 ou la revendication 2, **caractérisée en ce que** l'élément de contour (17) est subdivisé en au moins deux parties individuelles, les parties individuelles étant de forme annulaire.

4. Vanne à membrane selon l'une des revendications 1 à 3, **caractérisée en ce que** l'agencement (14) de déformation de membrane comprend un élément de répartition de la pression.

5. Vanne à membrane selon l'une des revendications 1 à 4, **caractérisée en ce que** l'élément (15) de déformation élastique est conçu sous la forme d'un élément à ressort, de préférence sous la forme d'un ressort à disque.

6. Vanne à membrane selon l'une des revendications 1 à 5, **caractérisée en ce que** l'élément (15) de déformation élastique comprend plus de deux, de préférence plus de trois, en particulier plus de quatre éléments à ressort.

7. Vanne à membrane selon l'une des revendications 1 à 6, **caractérisée en ce que** l'élément de transmission (16) est relié à l'élément d'entraînement (9).

8. Vanne à membrane selon l'une des revendications 1 à 7, **caractérisée en ce que** l'élément de transmission (16) comprend un corps annulaire (19).

9. Vanne à membrane selon l'une des revendications 1 à 8, **caractérisée en ce que** l'élément de transmission (16) est formé d'un seul tenant avec l'élément d'entraînement (9).

10. Vanne à membrane selon l'une des revendications 1 à 9, **caractérisée en ce qu'**au moins un élément de fixation (20) est agencé sur l'élément de transmission (16) pour aligner l'élément de contour (17).
